# EUROPEAN PATENT APPLICATION

(11) **EP 4 800 641 A1**
(43) Date of publication of application: **02.09.2026**
(21) Application number: 26157870.2
(22) Date of filing: 11.02.2026
(51) Int. Cl.: G06T 7/00

(54) **ANOMALY DETECTION METHOD USING DEPTH INFORMATION**

(30) Priority: 14.02.2025 KR 20250019694
(71) Applicant: AIVEX Co., Ltd., Yongin-si, Gyeonggi-do 16942 (KR)
(72) Inventor: BANG, Seongdeok, 02587 Seoul (KR)
(74) Representative: AWA Sweden AB

(57) **Abstract**

Disclosed is a method for anomaly detection using depth information, the method performed by one or more processors of a computing device according to an exemplary embodiment of the present disclosure.
the method may include: obtaining first image data including depth information by scanning a surface of a product; generating reference image data of the product based on the first image data; obtaining second image data based on a difference between the reference image data and the first image data; and detecting a defect region of the product based on the second image data.

## Description

### CROSS-REFERENCE TO RELATED APPLICATIONS

This application claims priority to and the benefit of Korean Patent Application No. 10-2025-0019694 filed in the Korean Intellectual Property Office on February 14, 2025, the entire contents of which are incorporated herein by reference.

### TECHNICAL FIELD

The present invention relates to a method for anomaly detection using depth information, and more particularly, to a method for detecting a defect region on a non planar surface by using a 3D profiler.

### BACKGROUND ART

In manufacturing processes, it is essential to precisely detect minute defects such as scratches and dents. In particular, for products requiring high quality, such as automobile parts, semiconductor wafers, and display panels, defect detection technology is directly related to product confidencereliability.

In general, for products having a flat surface, defects can be relatively easily detected from measurement data obtained using a 3D sensor. However, when the surface of a product has curvature or a complex shape, it is difficult to distinguish natural surface variations from irregularities of defects.

Conventional 3D inspection technology is based on simple 3D mapping, which has limitations in accurately analyzing complex shape variations. That is, with only the conventional technology, natural surface variations and actual defects cannot be effectively distinguished, and thus there is a high possibility that false positive or false negative problems may occur.

Korean Registered Patent No. 10-2413180, with a registration date of June 21, 2022, discloses a three dimensional image processing apparatus for an inspection target and a defective product sorting apparatus using the same.

### SUMMARY OF THE INVENTION

The present disclosure aims to provide a product inspection apparatus that estimates a baseline on a non planar surface by using a 3D profiler and detects a defect region based on the estimated baseline.

Meanwhile, the technical problems to be achieved by the present disclosure are not limited to the technical problems mentioned above, and various technical problems may be included within a range apparent to those skilled in the art from the description below.

According to one embodiment of the present disclosure for realizing the above described problems, a method for anomaly detection using depth information is disclosed. The method includes obtaining first image data including depth information by scanning a surface of a product, generating reference image data of the product based on the first image data, obtaining second image data based on a difference between the reference image data and the first image data, and detecting a defect region of the product based on the second image data.

In one embodiment, obtaining the first image data includes obtaining N bit raw image data including depth information by scanning the surface of the product, preprocessing the N bit raw image data to generate M bit preprocessed image data, and obtaining the preprocessed image data as the first image data, wherein M may be a natural number greater than N.

In one embodiment, generating the reference image data may include generating a first baseline based on cross sectional data extracted from the first image data in a first direction, generating a second baseline based on a data distribution extracted from the first image data in a second direction different from the first direction, and generating the reference image data by combining the first baseline and the second baseline.

In one embodiment, generating the first baseline may include selecting a mathematical model based on the cross sectional data, sampling data corresponding to a plurality of reference points from the cross sectional data, fitting the selected mathematical model using the sampled data, and generating the first baseline using the fitted mathematical model.

In one embodiment, generating the second baseline may include generating the second baseline based on an average value of the extracted data distribution.

In one embodiment, obtaining the second image data may include converting a data type of each of the reference image data and the first image data, calculating a difference between the reference image data and the first image data based on the converted data type, and obtaining the second image data by emphasizing a data point having a difference larger than a threshold value.

n one embodiment, detecting the defect region of the product may include correcting the second image data by clipping values outside a threshold range into the threshold range in the second image data, and detecting the defect region of the product based on the corrected image data.

In one embodiment, the method may further include performing anomaly detection of the product based on the detected defect region by using a neural network model.

In one embodiment, performing anomaly detection of the product may include obtaining third image data including pixel intensity information by scanning the surface of the product, verifying the detected defect region based on the third image data, and performing anomaly detection of the product based on the detected defect region when a confidence of the detected defect region is equal to or greater than a threshold value as a result of the verification.

In one embodiment, performing anomaly detection of the product may include obtaining third image data including pixel intensity information by scanning the surface of the product, and performing anomaly detection of the product based on the detected defect region and the third image data by using the neural network model.

According to one embodiment of the present disclosure for realizing the above described problems, a computer program stored in a computer readable storage medium is disclosed. When the computer program is executed by at least one processor, the computer program causes the at least one processor to perform operations including an operation of obtaining first image data including depth information by scanning a surface of a product, an operation of generating reference image data of the product based on the first image data, an operation of obtaining second image data based on a difference between the reference image data and the first image data, and an operation of detecting a defect region of the product based on the second image data.

According to one embodiment of the present disclosure for realizing the above described problems, a computing device is disclosed. The device includes at least one processor and a memory, and the at least one processor may be configured to obtain first image data including depth information by scanning a surface of a product, generate reference image data of the product based on the first image data, obtain second image data based on a difference between the reference image data and the first image data, and detect a defect region of the product based on the second image data.

The present disclosure has an effect of accurately distinguishing a normal shape from a defect by estimating a baseline on a non planar surface by using a 3D profiler and detecting a defect region based on the estimated baseline.

Meanwhile, the effects of the present disclosure are not limited to the effects mentioned above, and various effects may be included within a range apparent to those skilled in the art from the description below.

### BRIEF DESCRIPTION OF THE DRAWINGS

FIG. 1 is a block diagram illustrating a computing device according to one embodiment of the present disclosure.
FIG. 2 is a schematic diagram illustrating a neural network according to one embodiment of the present disclosure.
FIG. 3 is a diagram illustrating an anomaly detection system according to one embodiment of the present disclosure.
FIG. 4 is a diagram illustrating images including depth information according to one embodiment of the present disclosure.
FIG. 5 is a diagram illustrating an image processed such that a defect is emphasized according to one embodiment of the present disclosure.
FIG. 6 is a diagram for explaining a method for anomaly detection according to one embodiment of the present disclosure.
FIG. 7 is a diagram for explaining a method for anomaly detection according to another embodiment of the present disclosure.
FIG. 8 is a diagram for explaining a method for anomaly detection according to still another embodiment of the present disclosure.
FIG. 9 is a flowchart for explaining a method for anomaly detection using depth information according to one embodiment of the present disclosure.
FIG. 10 is a brief and general schematic diagram of an exemplary computing environment in which embodiments of the present disclosure may be implemented.

### DETAILED DESCRIPTION

Various exemplary embodiments will now be described with reference to drawings. In the present specification, various descriptions are presented to provide appreciation of the present disclosure. However, it is apparent that the exemplary embodiments can be executed without the specific description.

"Component", "module", "system", and the like which are terms used in the specification refer to a computer-related entity, hardware, firmware, software, and a combination of the software and the hardware, or execution of the software. For example, the component may be a processing procedure executed on a processor, the processor, an object, an execution thread, a program, and/or a computer, but is not limited thereto. For example, both an application executed in a computing device and the computing device may be the components. One or more components may reside within the processor and/or a thread of execution. One component may be localized in one computer. One component may be distributed between two or more computers. Further, the components may be executed by various computer-readable media having various data structures, which are stored therein. The components may perform communication through local and/or remote processing according to a signal (for example, data transmitted from another system through a network such as the Internet through data and/or a signal from one component that interacts with other components in a local system and a distribution system) having one or more data packets, for example. The term "or" is intended to mean not exclusive "or" but inclusive "or". That is, when not separately specified or not clear in terms of a context, a sentence "X uses A or B" is intended to mean one of the natural inclusive substitutions. That is, the sentence "X uses A or B" may be applied to any of the case where X uses A, the case where X uses B, or the case where X uses both A and B. Further, it should be understood that the term "and/or" used in this specification designates and includes all available combinations of one or more items among enumerated related items.
It should be appreciated that the term "comprise" and/or "comprising" means presence of corresponding features and/or components. However, it should be appreciated that the term "comprises" and/or "comprising" means that presence or addition of one or more other features, components, and/or a group thereof is not excluded. Further, when not separately specified or it is not clear in terms of the context that a singular form is indicated, it should be construed that the singular form generally means "one or more" in this specification and the claims.
The term "at least one of A or B" should be interpreted to mean "a case including only A", "a case including only B", and "a case in which A and B are combined".
Those skilled in the art need to recognize that various illustrative logical blocks, configurations, modules, circuits, means, logic, and algorithm steps described in connection with the exemplary embodiments disclosed herein may be additionally implemented as electronic hardware, computer software, or combinations of both sides. To clearly illustrate the interchangeability of hardware and software, various illustrative components, blocks, configurations, means, logic, modules, circuits, and steps have been described above generally in terms of their functionalities. Whether the functionalities are implemented as the hardware or software depends on a specific application and design restrictions given to an entire system. Skilled artisans may implement the described functionalities in various ways for each particular application. However, such implementation decisions should not be interpreted as causing a departure from the scope of the present disclosure.

The description of the presented exemplary embodiments is provided so that those skilled in the art of the present disclosure use or implement the present disclosure. Various modifications to the exemplary embodiments will be apparent to those skilled in the art. Generic principles defined herein may be applied to other embodiments without departing from the scope of the present disclosure. Therefore, the present disclosure is not limited to the exemplary embodiments presented herein. The present disclosure should be analyzed within the widest range which is coherent with the principles and new features presented herein.

In the present disclosure, a network function and an artificial neural network and a neural network may be interchangeably used.

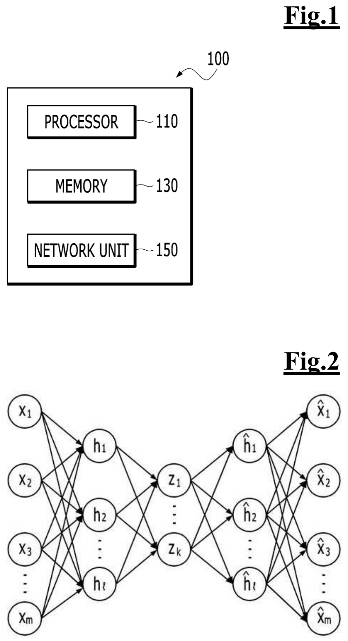

FIG. 1 is a block diagram illustrating a computing device according to one embodiment of the present disclosure.

A configuration of the computing device 100 illustrated in FIG. 1 is only an example shown through simplification. In an exemplary embodiment of the present disclosure, the computing device 100 may include other components for performing a computing environment of the computing device 100 and only some of the disclosed components may constitute the computing device 100.

The computing device 100 may include a processor 110, a memory 130, and a network unit 150.

The processor 110 may be constituted by one or more cores and may include processors for data analysis and deep learning, which include a central processing unit (CPU), a general purpose graphics processing unit (GPGPU), a tensor processing unit (TPU), and the like of the computing device. The processor 110 may read a computer program stored in the memory 130 to perform data processing for machine learning according to an exemplary embodiment of the present disclosure. According to an exemplary embodiment of the present disclosure, the processor 110 may perform a calculation for training the neural network. The processor 110 may perform calculations for training the neural network, which include processing of input data for training in deep learning (DL), extracting a feature in the input data, calculating an error, updating a weight of the neural network using backpropagation, and the like. At least one of the CPU, GPGPU, and TPU of the processor 110 may process training of a network function. For example, both the CPU and the GPGPU may process the training of the network function and data classification using the network function. Further, in an exemplary embodiment of the present disclosure, processors of a plurality of computing devices may be used together to process the training of the network function and the data classification using the network function. Further, the computer program executed in the computing device according to an exemplary embodiment of the present disclosure may be a CPU, GPGPU, or TPU executable program.

According to an exemplary embodiment of the present disclosure, the memory 130 may store any type of information generated or determined by the processor 110 and any type of information received by the network unit 150.

According to an exemplary embodiment of the present disclosure, the memory 130 may include at least one type of storage medium of a flash memory type storage medium, a hard disk type storage medium, a multimedia card micro type storage medium, a card type memory (for example, an SD or XD memory, or the like), a random access memory (RAM), a static random access memory (SRAM), a read-only memory (ROM), an electrically erasable programmable read-only memory (EEPROM), a programmable read-only memory (PROM), a magnetic memory, a magnetic disk, and an optical disk. The computing device 100 may operate in connection with a web storage performing a storing function of the memory 130 on the Internet. The description of the memory is just an example and the present disclosure is not limited thereto.

The network unit 150 according to an exemplary embodiment of the present disclosure may use various wired communication systems such as public switched telephone network (PSTN), x digital subscriber line (xDSL), rate adaptive DSL (RADSL), multi rate DSL (MDSL), very high speed DSL (VDSL), universal asymmetric DSL (UADSL), high bit rate DSL (HDSL), and local area network (LAN).

The network unit 150 presented in the present disclosure may use various wireless communication systems such as code division multi access (CDMA), time division multi access (TDMA), frequency division multi access (FDMA), orthogonal frequency division multi access (OFDMA), single carrier-FDMA (SC-FDMA), and other systems.

In the present disclosure, the network unit 110 may be configured regardless of a communication aspect, such as wired communication and wireless communication, and may be configured by various communication networks, such as a Personal Area Network (PAN) and a Wide Area Network (WAN). Further, the network may be a publicly known World Wide Web (WWW), and may also use a wireless transmission technology used in short range communication, such as Infrared Data Association (IrDA) or Bluetooth.

The techniques described in this specification can be used in other networks as well as the networks mentioned above.

FIG. 2 is a schematic diagram illustrating a neural network according to one embodiment of the present disclosure.

Throughout the present specification, a computation model, the neural network, a network function, and the neural network may be used as the same meaning. The neural network may be generally constituted by an aggregate of calculation units which are mutually connected to each other, which may be called nodes. The nodes may also be called neurons. The neural network is configured to include one or more nodes. The nodes (alternatively, neurons) constituting the neural networks may be connected to each other by one or more links.

In the neural network, one or more nodes connected through the link may relatively form the relationship between an input node and an output node. Concepts of the input node and the output node are relative and a predetermined node which has the output node relationship with respect to one node may have the input node relationship in the relationship with another node and vice versa. As described above, the relationship of the input node to the output node may be generated based on the link. One or more output nodes may be connected to one input node through the link and vice versa.

In the relationship of the input node and the output node connected through one link, a value of data of the output node may be determined based on data input in the input node. Here, a link connecting the input node and the output node to each other may have a weight. The weight may be variable and the weight is variable by a user or an algorithm in order for the neural network to perform a desired function. For example, when one or more input nodes are mutually connected to one output node by the respective links, the output node may determine an output node value based on values input in the input nodes connected with the output node and the weights set in the links corresponding to the respective input nodes.

As described above, in the neural network, one or more nodes are connected to each other through one or more links to form a relationship of the input node and output node in the neural network. A characteristic of the neural network may be determined according to the number of nodes, the number of links, correlations between the nodes and the links, and values of the weights granted to the respective links in the neural network. For example, when the same number of nodes and links exist and there are two neural networks in which the weight values of the links are different from each other, it may be recognized that two neural networks are different from each other.

The neural network may be constituted by a set of one or more nodes. A subset of the nodes constituting the neural network may constitute a layer. Some of the nodes constituting the neural network may constitute one layer based on the distances from the initial input node. For example, a set of nodes of which distance from the initial input node is n may constitute n layers. The distance from the initial input node may be defined by the minimum number of links which should be passed through for reaching the corresponding node from the initial input node. However, a definition of the layer is predetermined for description and the order of the layer in the neural network may be defined by a method different from the aforementioned method. For example, the layers of the nodes may be defined by the distance from a final output node.

The initial input node may mean one or more nodes in which data is directly input without passing through the links in the relationships with other nodes among the nodes in the neural network. Alternatively, in the neural network, in the relationship between the nodes based on the link, the initial input node may mean nodes which do not have other input nodes connected through the links. Similarly thereto, the final output node may mean one or more nodes which do not have the output node in the relationship with other nodes among the nodes in the neural network. Further, a hidden node may mean nodes constituting the neural network other than the initial input node and the final output node.

In the neural network according to an exemplary embodiment of the present disclosure, the number of nodes of the input layer may be the same as the number of nodes of the output layer, and the neural network may be a neural network of a type in which the number of nodes decreases and then, increases again from the input layer to the hidden layer. Further, in the neural network according to another exemplary embodiment of the present disclosure, the number of nodes of the input layer may be smaller than the number of nodes of the output layer, and the neural network may be a neural network of a type in which the number of nodes decreases from the input layer to the hidden layer. Further, in the neural network according to yet another exemplary embodiment of the present disclosure, the number of nodes of the input layer may be larger than the number of nodes of the output layer, and the neural network may be a neural network of a type in which the number of nodes increases from the input layer to the hidden layer. The neural network according to still yet another exemplary embodiment of the present disclosure may be a neural network of a type in which the neural networks are combined.

A deep neural network (DNN) may refer to a neural network that includes a plurality of hidden layers in addition to the input and output layers. When the deep neural network is used, the latent structures of data may be determined. That is, latent structures of photos, text, video, voice, and music (e.g., what objects are in the photo, what the content and feelings of the text are, what the content and feelings of the voice are) may be determined. The deep neural network may include a convolutional neural network (CNN), a recurrent neural network (RNN), an auto encoder, generative adversarial networks (GAN), a restricted Boltzmann machine (RBM), a deep belief network (DBN), a Q network, a U network, a Siam network, a Generative Adversarial Network (GAN), and the like. The description of the deep neural network described above is just an example and the present disclosure is not limited thereto.

In an exemplary embodiment of the present disclosure, the network function may include the auto encoder. The auto encoder may be a kind of artificial neural network for outputting output data similar to input data. The auto encoder may include at least one hidden layer and odd hidden layers may be disposed between the input and output layers. The number of nodes in each layer may be reduced from the number of nodes in the input layer to an intermediate layer called a bottleneck layer (encoding), and then expanded symmetrical to reduction to the output layer (symmetrical to the input layer) in the bottleneck layer. The auto encoder may perform non-linear dimensional reduction. The number of input and output layers may correspond to a dimension after preprocessing the input data. The auto encoder structure may have a structure in which the number of nodes in the hidden layer included in the encoder decreases as a distance from the input layer increases. When the number of nodes in the bottleneck layer (a layer having a smallest number of nodes positioned between an encoder and a decoder) is too small, a sufficient amount of information may not be delivered, and as a result, the number of nodes in the bottleneck layer may be maintained to be a specific number or more (e.g., half of the input layers or more).

The neural network may be trained in at least one scheme of supervised learning, unsupervised learning, semi supervised learning, or reinforcement learning. The learning of the neural network may be a process in which the neural network applies knowledge for performing a specific operation to the neural network.

The neural network may be trained in a direction to minimize errors of an output. The training of the neural network is a process of repeatedly inputting training data into the neural network and calculating the output of the neural network for the training data and the error of a target and back-propagating the errors of the neural network from the output layer of the neural network toward the input layer in a direction to reduce the errors to update the weight of each node of the neural network. In the case of the supervised learning, the training data labeled with a correct answer is used for each training data (i.e., the labeled training data) and in the case of the unsupervised learning, the correct answer may not be labeled in each training data. That is, for example, the training data in the case of the supervised learning related to the data classification may be data in which category is labeled in each training data. The labeled training data is input to the neural network, and the error may be calculated by comparing the output (category) of the neural network with the label of the training data. As another example, in the case of the unsupervised learning related to the data classification, the training data as the input is compared with the output of the neural network to calculate the error. The calculated error is back-propagated in a reverse direction (i.e., a direction from the output layer toward the input layer) in the neural network and connection weights of respective nodes of each layer of the neural network may be updated according to the back propagation. A variation amount of the updated connection weight of each node may be determined according to a learning rate. Calculation of the neural network for the input data and the back-propagation of the error may constitute a training cycle (epoch). The learning rate may be applied differently according to the number of repetition times of the training cycle of the neural network. For example, in an initial stage of the training of the neural network, the neural network ensures a certain level of performance quickly by using a high learning rate, thereby increasing efficiency and uses a low learning rate in a latter stage of the training, thereby increasing accuracy.

In training of the neural network, the training data may be generally a subset of actual data (i.e., data to be processed using the trained neural network), and as a result, there may be a training cycle in which errors for the training data decrease, but the errors for the actual data increase. Overfitting is a phenomenon in which the errors for the actual data increase due to excessive training of the training data. For example, a phenomenon in which the neural network that trains a cat by showing a yellow cat sees a cat other than the yellow cat and does not recognize the corresponding cat as the cat may be a kind of overfitting. The overfitting may act as a cause which increases the error of the machine learning algorithm. Various optimization methods may be used in order to prevent the overfitting. In order to prevent the overfitting, a method such as increasing the training data, regularization, dropout of omitting a part of the node of the network in the process of training, utilization of a batch normalization layer, etc., may be applied.

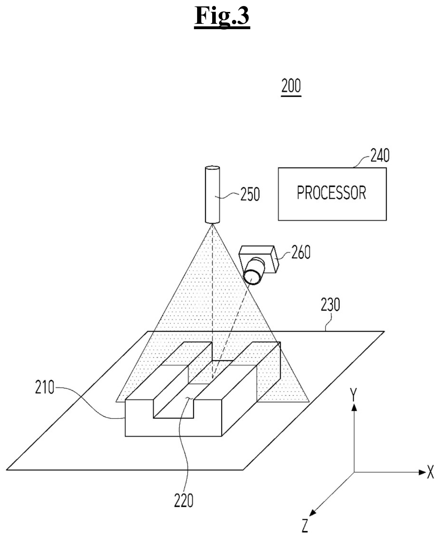

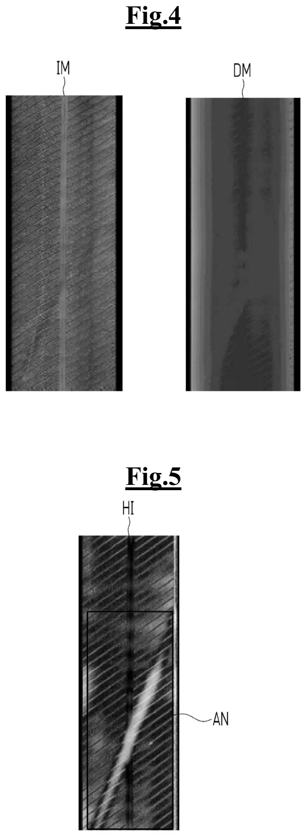

FIG. 3 is a diagram illustrating an anomaly detection system according to one embodiment of the present disclosure, and FIG. 4 is a diagram illustrating images including depth information according to one embodiment of the present disclosure.

Referring to FIG. 3, the anomaly detection system 200 may estimate a baseline on a non planar surface by using a 3D profiler and may detect a defect region based on the estimated baseline. In the present disclosure, the baseline may be a mathematical modeling of a shape of a normal product in which a defect does not exist.

When conventional machine learning or statistical methods are applied, it is difficult to set the baseline. In particular, in a non standard product, since a constant pattern does not exist, accuracy may be degraded when a trained model is applied. In addition, traditional mathematical models, for example, plane approximation, a quadratic polynomial, a log scale model, and the like, have limitations in that it is difficult to completely describe a complex surface structure.

In addition, in a manufacturing site, since a product moving at a high speed should be inspected, real time processing should be possible. However, conventional methods require complex operations or have a slow operation speed, and thus it is difficult to perform immediate quality control in a mass production line.

According to one embodiment of the present disclosure, the baseline may be precisely estimated even on a non planar surface that is not flat. Through this, a normal shape and a defect may be distinguished more accurately than before, and real time detection may be possible by applying an optimized algorithm. In other words, the present disclosure may be improved to effectively select and inspect only an outlier, which is a specific region having a high possibility that a defect occurs.

The anomaly detection system 200 may include a processor 240, a projector 250, and a camera 260. The processor 240 may obtain first image data including depth information by scanning a surface of a product 210. The depth information may be stored in a form of a 3D map by measuring an absolute distance from a sensor to the product.

Specifically, the product 210 to be inspected may move along a Z axis, and a laser line of the projector 250 may be projected perpendicular to the Z axis. Since the surface of the product 210 is not flat, the projected laser line becomes curved, and the camera 260 may recognize a deformed pattern and may record pixel coordinates for each scan. The processor 240 may construct a 3D model by collecting data scanned in each Z axis direction. Since a pixel value of each X axis indicates a height of a Y axis at a corresponding position, data in an overall form of a stack of depth slices may be obtained.

To represent a fine height difference, the processor 240 may preprocess image data. The processor 240 may preprocess N bit raw image data including depth information to obtain M bit preprocessed image data DM of FIG. 4 as the first image data. Here, M may be a natural number greater than N.

For example, the processor 240 may convert an 8 bit 0 to 255 image into a 16 bit 0 to 65,535 image DM of FIG. 4. The processor 240 may process a NaN Not a Number value as 0 in the 8 bit 0 to 255 image, and may perform normalization to values within a range of 0 to 65,536 based on a minimum value and a maximum value of values excluding the NaN value.

The processor 240 may obtain third image data IM of FIG. 4 including pixel intensity information by measuring intensity of light reflected from the product surface as well as depth information, and may store the third image data in a form of a 2D map. The 2D map is represented by pixel values in a range of 0 to 255 and may include brightness information.

The processor 240 may generate reference image data of the product based on the first image data. As illustrated in FIG. 3, the product 210 may include a defect 220 as well as a natural variation of the surface. For example, the defect 220 may include, for example, a scratch and a dent. The reference image data may mean a mathematical modeling of a shape when the product is in a normal state. In other words, the reference image data may mean a mathematical modeling of an ideal product surface in which a defect does not exist. Accordingly, when the reference image data is known, a portion greatly different from the reference image data in actually measured data may be determined as a defect.

In order to generate the reference image data, the processor 240 may analyze a cross sectional shape of the product to apply a most suitable mathematical model and may predict a normal shape by using the applied mathematical model. First, the processor 240 may generate a first baseline based on cross sectional data extracted from the first image data in a first direction, for example, a horizontal direction or an X axis direction. For example, the cross sectional data may be horizontal cross sectional data. The processor 240 may generate a second baseline based on a data distribution extracted from the first image data in a second direction different from the first direction, for example, a vertical direction or a Y axis direction. For example, the data distribution may be a data distribution of a vertical cross section.

Hereinafter, assuming that a data distribution of a horizontal cross section is more complex than a data distribution of a vertical cross section, a method of generating the first baseline and the second baseline will be described in more detail.

### <Generation of the First Baseline>

The processor 240 may extract cross sectional data by scanning a plurality of first direction cross sections, for example, a horizontal direction or an X axis direction, in a second direction, for example, a vertical direction or a Y axis direction. The processor 240 may select a most suitable mathematical model based on the cross sectional data. The mathematical model may be a polynomial model or a logarithmic model, but is not limited thereto. The processor 240 may sample data corresponding to a plurality of reference points from the cross sectional data. The plurality of reference points may be randomly extracted from the cross sectional data and may be about 20% of entire data, but is not limited thereto.

The processor 240 may fit the selected mathematical model using the sampled data. The fitting may mean that the processor 240 adjusts coefficients of a mathematical model or a function selected in advance to match the sampled data.

The processor 240 may generate the first baseline using the fitted mathematical model.

### <Generation of the Second Baseline>

The processor 240 may obtain a data distribution by scanning a plurality of second direction cross sections, for example, a vertical direction or a Y axis direction, in a third direction, for example, a Z axis direction. The data distribution may mean a data set or a pattern indicating how data values obtained in each cross section change.

The processor 240 may generate the second baseline based on an average value of the extracted data distribution. When the data distribution of the vertical cross section is more complex than the data distribution of the horizontal cross section, the data distribution may be preserved as much as possible by applying a method using an average value of the data distribution rather than mathematically modeling the data distribution. Accordingly, when the data distribution of the horizontal cross section is more complex than the data distribution of the vertical cross section, a method for generating the first baseline and a method for generating the second baseline may be applied opposite to each other.

The processor 240 may generate the reference image data by combining the first baseline and the second baseline. For example, the first baseline may be suitable for detecting a scratch and the like, and the second baseline may be suitable for detecting a dented portion. Accordingly, when the first baseline and the second baseline are combined and used as the reference image data, more precise defect detection may be possible.

The processor 240 may obtain second image data based on a difference between the reference image data and the first image data. The second image data may be an image processed such that a defect is highlighted.

FIG. 5 is a diagram illustrating an image processed such that a defect is emphasized according to one embodiment of the present disclosure.

When the reference image data indicating a reference shape when the product is in a normal state is subtracted from the first image data, which is actually measured data, a defect or an abnormal pattern deviating from the normal state may be identified. That is, since a difference is calculated by subtracting the reference image data from the first image data, a uint16 Unsigned 16-bit Integer data type may be converted into an int16 Signed 16-bit Integer data type. Since uint16 has a value range from 0 to 65,535, a value less than 0 cannot be stored, but since int16 has a value range from -32,768 to 32,767, a negative value can be stored. If a reference image data value is greater than a first image data value, a subtraction result becomes negative, and thus an int16 data type capable of representing a negative value may be used.

Accordingly, in order to calculate a difference between the reference image data and the first image data, the processor 240 may convert data types of each of the reference image data and the first image data. The processor 240 may calculate a difference between the reference image data and the first image data based on the converted data type.

The processor 240 may obtain the second image data HI by emphasizing a data point having a large difference. The emphasizing a data point having a large difference may mean considering only a magnitude of the difference. The processor 240 may apply abs an absolute value to a subtraction result to consider only a magnitude of the difference. In addition, when a magnitude of the difference is equal to or greater than a threshold value, the processor 240 may visually further emphasize a corresponding region by displaying the corresponding region with higher color contrast than a surrounding region.

The processor 240 may detect the defect region AN of the product based on the second image data HI.

According to embodiments, the processor 240 may correct the second image data by clipping values outside a threshold range into the threshold range in the second image data HI. Accordingly, outliers corresponding to too large values or too small values may be removed so that only data suitable for analysis may be maintained. For example, the processor 240 may remove an outlier based on a percentile by using a Numpy np.percentile function. When a np.percentile correct_depth_map, 10, 90 function is used, in entire data, lowest 10% and highest values may be clipped so that only central 80% data values are maintained. Here, the clipping may mean adjusting an outlier to a threshold range.

The processor 240 may detect the defect region of the product based on the corrected image data.

As described above, the processor 240 may generate the second image data based on a difference between the reference image data and the first image data. As another embodiment, the processor 240 may generate second 1 image data based on a difference between the first baseline and the first image data and may generate second 2 image data based on a difference between the second baseline and the first image data. The processor 240 may also generate the second image data by combining the second 1 image data and the second 2 image data. The processor 240 may detect the defect region AN of the product based on the second image data HI.

The processor may perform anomaly detection of the product based on the detected defect region AN by using a neural network model.

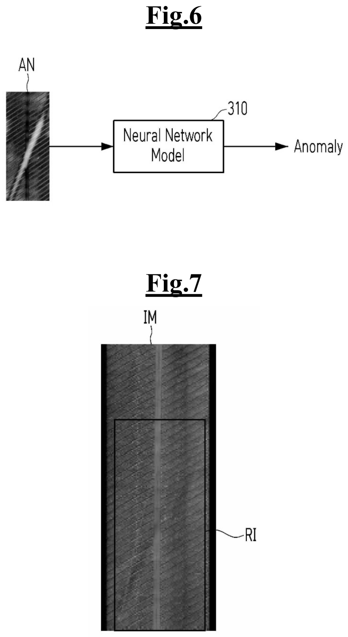

FIG. 6 is a diagram for explaining a method for anomaly detection according to one embodiment of the present disclosure.

Referring to FIG. 6, the processor may input the defect region AN detected from the second image data to a deep learning model 310. The processor may determine whether the detected defect region AN actually corresponds to an anomaly by using the deep learning model 310. The deep learning model 310 may be a CNN Convolutional Neural Networks, an autoencoder, a GAN, a Transformer based model, and the like, but is not limited thereto.

According to embodiments, the processor may classify what type of defect the detected defect region AN is by using the deep learning model 310.

According to embodiments of the present disclosure, by effectively selecting the defect region AN having a high possibility that a defect occurs and by selecting and intensively inspecting only the selected defect region AN, unnecessary inspection time may be reduced and inspection efficiency may be improved.

FIG. 7 is a diagram for explaining a method for anomaly detection according to another embodiment of the present disclosure.

Referring to FIG. 7, the processor may obtain third image data IM including pixel intensity information by scanning the surface of the product. Before inputting the defect region detected from the second image data to a deep learning model, the processor may verify the detected defect region based on the third image data IM. In other words, the processor may verify whether the defect region detected based on the third image data IM is simple noise or whether the defect region is not simple noise and has a high possibility of including an actual defect. As a result of the verification, when the defect region is determined as simple noise, the processor may not perform anomaly detection of the product.

Specifically, the processor may extract, as a region of interest RI, a region corresponding to the defect region in the third image data IM. In other words, the processor may extract, as the region of interest RI, a region located at the same position as the defect region and within the same pixel range in the third image data.

The processor may check whether a brightness change exists also in the region of interest RI or whether a brightness change pattern corresponding to a defect type determined in the defect region appears.

As a result of the checking, when a confidence of the defect region is equal to or greater than a threshold value, anomaly detection of the product may be performed based on the defect region. Specifically, the processor may calculate the confidence by calculating a Euclidean distance or a cosine similarity between a feature vector of the defect region and a feature vector of the region of interest. Alternatively, the processor may calculate the confidence by measuring similarity between a distribution of the defect region and a distribution of the region of interest in a latent space. When the confidence is equal to or greater than the threshold value, the processor may input the defect region to the deep learning model to determine whether the defect region actually corresponds to an anomaly. Conversely, when the confidence is less than the threshold value, the processor may not perform anomaly detection of the product.

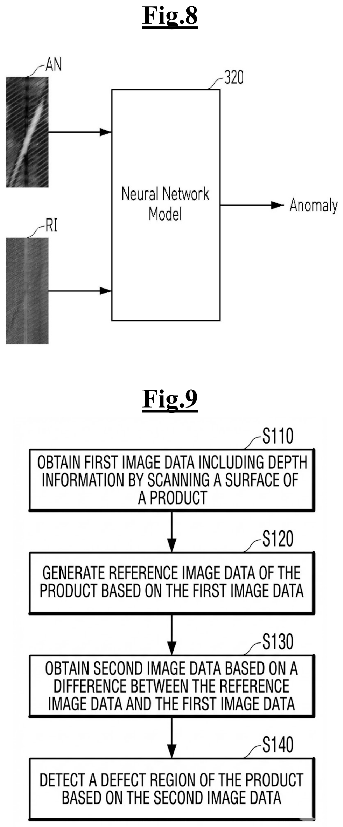

FIG. 8 is a diagram for explaining a method for anomaly detection according to still another embodiment of the present disclosure.

Referring to FIG. 8, the processor may obtain third image data including pixel intensity information by scanning the surface of the product. The processor may extract, as the region of interest RI, a region corresponding to the defect region AN in the third image data.

The processor may input the defect region AN and the region of interest RI together to a neural network model 320. The processor may determine whether the defect region AN actually corresponds to an anomaly based on the detected defect region AN and the region of interest RI by using the neural network model 320.

The neural network model 310 of FIG. 6 may be a model trained based on training data using the defect region of the second image data as input data and using whether the defect region actually corresponds to an anomaly as ground truth data.

The neural network model 320 of FIG. 8 may be a model trained based on training data using the defect region of the second image data and the region of interest of the third image data as input data and using whether the defect region actually corresponds to an anomaly as ground truth data.

As still another embodiment of the present disclosure, the processor may determine that the defect region actually corresponds to an anomaly by using a first deep learning model and a second deep learning model.

As a first embodiment, the processor may determine whether the defect region actually corresponds to an anomaly by using the first deep learning model. In addition, the processor may determine whether the region of interest RI actually corresponds to an anomaly by using the second deep learning model. When it is determined that both the defect region AN and the region of interest RI correspond to an anomaly, the processor may finally determine that it corresponds to an anomaly. However, when it is determined that the defect region AN corresponds to an anomaly but the region of interest RI does not correspond to an anomaly, the processor may finally determine that it does not correspond to an anomaly.

As a second embodiment, the processor may classify what type of defect the defect region is by using the first deep learning model. The processor may classify what type of defect the region of interest is by using the second deep learning model. The processor may finally determine that it corresponds to an anomaly only when a defect type of the defect region and a defect type of the region of interest match each other.

FIG. 9 is a flowchart for explaining a method for anomaly detection using depth information according to one embodiment of the present disclosure.

Referring to FIG. 9, the processor may obtain first image data including depth information by scanning the surface of the product S110. To represent a fine height difference, the processor 240 may preprocess image data. The processor may preprocess N bit raw image data including depth information to obtain M bit preprocessed image data as the first image data. Here, M may be a natural number greater than N.

The processor may generate reference image data of the product based on the first image data S120. The reference image data may mean a mathematical modeling of a shape when the product is in a normal state. In order to generate the reference image data, the processor may analyze a cross sectional shape of the product to apply a most suitable mathematical model and may predict a normal shape by using the applied mathematical model.

First, the processor may generate a first baseline based on horizontal cross sectional data from the first image data. The processor may generate a second baseline based on a data distribution extracted from the first image data in a vertical direction different from the first direction. The processor may generate the reference image data by combining the first baseline and the second baseline.

The processor may obtain second image data based on a difference between the reference image data and the first image data S130. When the reference image data indicating a reference shape when the product is in a normal state is subtracted from the first image data, which is actually measured data, a defect or an abnormal pattern deviating from the normal state may be identified. Accordingly, in order to calculate a difference between the reference image data and the first image data, the processor may convert data types of each of the reference image data and the first image data. The processor may calculate a difference between the reference image data and the first image data based on the converted data type.

The processor may detect a defect region of the product based on the second image data S140. The processor 240 may detect the defect region of the product based on the corrected image data.

According to one embodiment of the present disclosure, the baseline may be precisely estimated even on a non planar surface that is not flat. Through this, a normal shape and a defect may be distinguished more accurately than before, and real time detection may be possible by applying an optimized algorithm. In other words, the present disclosure may effectively select only an outlier, which is a specific region having a high possibility that a defect occurs, and may reduce unnecessary inspection time and improve inspection efficiency by selecting and intensively inspecting only the selected region.

Meanwhile, a computer-readable medium storing a data structure according to an embodiment of the present disclosure is disclosed.

The data structure may refer to the organization, management, and storage of data that enables efficient access to and modification of data. The data structure may refer to the organization of data for solving a specific problem (e.g., data search, data storage, data modification in the shortest time). The data structures may be defined as physical or logical relationships between data elements, designed to support specific data processing functions. The logical relationship between data elements may include a connection between data elements that the user defines. The physical relationship between data elements may include an actual relationship between data elements physically stored on a computer-readable storage medium (e.g., persistent storage device). The data structure may specifically include a set of data, a relationship between the data, a function which may be applied to the data, or instructions. Through an availablely designed data structure, a computing device can perform operations while using the resources of the computing device to a minimum. Specifically, the computing device can increase the efficiency of operation, read, insert, delete, compare, exchange, and search through the availablely designed data structure.

The data structure may be divided into a linear data structure and a non-linear data structure according to the type of data structure. The linear data structure may be a structure in which only one data is connected after one data. The linear data structure may include a list, a stack, a queue, and a deque. The list may mean a series of data sets in which an order exists internally. The list may include a linked list. The linked list may be a data structure in which data is connected in a scheme in which each data is linked in a row with a pointer. In the linked list, the pointer may include link information with next or previous data. The linked list may be represented as a single linked list, a double linked list, or a circular linked list depending on the type. The stack may be a data listing structure with limited access to data. The stack may be a linear data structure that may process (e.g., insert or delete) data at only one end of the data structure. The data stored in the stack may be a data structure (LIFO-Last in First Out) in which the data is input last and output first. The queue is a data listing structure that may access data limitedly and unlike a stack, the queue may be a data structure (FIFO-First in First Out) in which late stored data is output late. The deque may be a data structure capable of processing data at both ends of the data structure.

The non-linear data structure may be a structure in which a plurality of data are connected after one data. The non-linear data structure may include a graph data structure. The graph data structure may be defined as a vertex and an edge, and the edge may include a line connecting two different vertices. The graph data structure may include a tree data structure. The tree data structure may be a data structure in which there is one path connecting two different vertices among a plurality of vertices included in the tree. That is, the tree data structure may be a data structure that does not form a loop in the graph data structure.

In the present disclosure, a network function, an artificial neural network, and a neural network may be used to be exchangeable. From here on, it will be described uniformly using neural networks.

The data structure may include the neural network. In addition, the data structures, including the neural network, may be stored in a computer readable medium. The data structure including the neural network may also include data preprocessed for processing by the neural network, data input to the neural network, weights of the neural network, hyper parameters of the neural network, data obtained from the neural network, an active function associated with each node or layer of the neural network, and a loss function for training the neural network. The data structure including the neural network may include predetermined components of the components disclosed above. In other words, the data structure including the neural network may include all of data preprocessed for processing by the neural network, data input to the neural network, weights of the neural network, hyper parameters of the neural network, data obtained from the neural network, an active function associated with each node or layer of the neural network, and a loss function for training the neural network or a combination thereof. In addition to the above-described configurations, the data structure including the neural network may include predetermined other information that determines the characteristics of the neural network. In addition, the data structure may include all types of data used or generated in the calculation process of the neural network, and is not limited to the above. The computer readable medium may include a computer readable recording medium and/or a computer readable transmission medium. The neural network may be generally constituted by an aggregate of calculation units which are mutually connected to each other, which may be called nodes. The nodes may also be called neurons. The neural network is configured to include one or more nodes.

The data structure may include data input into the neural network. The data structure including the data input into the neural network may be stored in the computer readable medium. The data input to the neural network may include training data input in a neural network training process and/or input data input to a neural network in which training is completed. The data input to the neural network may include preprocessed data and/or data to be preprocessed. The preprocessing may include a data processing process for inputting data into the neural network. Therefore, the data structure may include data to be preprocessed and data generated by preprocessing. The data structure is just an example and the present disclosure is not limited thereto.

The data structure may include the weight of the neural network (in the present disclosure, the weight and the parameter may be used as the same meaning). In addition, the data structures, including the weight of the neural network, may be stored in the computer readable medium. The neural network may include a plurality of weights. The weight may be variable and the weight is variable by a user or an algorithm in order for the neural network to perform a desired function. For example, when one or more input nodes are mutually connected to one output node by the respective links, the output node may determine a data value output from an output node based on values input in the input nodes connected with the output node and the weights set in the links corresponding to the respective input nodes. The data structure is just an example and the present disclosure is not limited thereto.

As a non-limiting example, the weight may include a weight which varies in the neural network training process and/or a weight in which neural network training is completed. The weight which varies in the neural network training process may include a weight at a time when a training cycle starts and/or a weight that varies during the training cycle. The weight in which the neural network training is completed may include a weight in which the training cycle is completed. Accordingly, the data structure including the weight of the neural network may include a data structure including the weight which varies in the neural network training process and/or the weight in which neural network training is completed. Accordingly, the above-described weight and/or a combination of each weight are included in a data structure including a weight of a neural network. The data structure is just an example and the present disclosure is not limited thereto.

The data structure including the weight of the neural network may be stored in the computer-readable storage medium (e.g., memory, hard disk) after a serialization process. Serialization may be a process of storing data structures on the same or different computing devices and later reconfiguring the data structure and converting the data structure to a form that may be used. The computing device may serialize the data structure to send and receive data over the network. The data structure including the weight of the serialized neural network may be reconfigured in the same computing device or another computing device through deserialization. The data structure including the weight of the neural network is not limited to the serialization. Furthermore, the data structure including the weight of the neural network may include a data structure (for example, B-Tree, Trie, m-way search tree, AVL tree, and Red-Black Tree in a nonlinear data structure) to increase the efficiency of operation while using resources of the computing device to a minimum. The above-described matter is just an example and the present disclosure is not limited thereto.

The data structure may include hyper-parameters of the neural network. In addition, the data structures, including the hyper-parameters of the neural network, may be stored in the computer readable medium. The hyper-parameter may be a variable which may be varied by the user. The hyper-parameter may include, for example, a learning rate, a cost function, the number of training cycle iterations, weight initialization (for example, setting a range of weight values to be subjected to weight initialization), and Hidden Unit number (e.g., the number of hidden layers and the number of nodes in the hidden layer). The data structure is just an example and the present disclosure is not limited thereto.

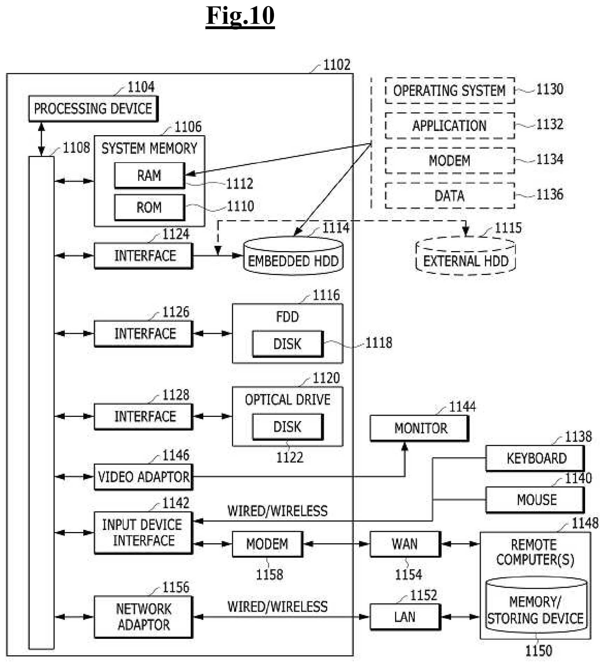

FIG. 10 is a normal and schematic view of an exemplary computing environment in which the exemplary embodiments of the present disclosure may be implemented.

It is described above that the present disclosure may be generally implemented by the computing device, but those skilled in the art will well know that the present disclosure may be implemented in association with a computer executable command which may be executed on one or more computers and/or in combination with other program modules and/or a combination of hardware and software.

In general, the program module includes a routine, a program, a component, a data structure, and the like that execute a specific task or implement a specific abstract data type. Further, it will be well appreciated by those skilled in the art that the method of the present disclosure can be implemented by other computer system configurations including a personal computer, a handheld computing device, microprocessor-based or programmable home appliances, and others (the respective devices may operate in connection with one or more associated devicesas well as a single-processor or multi-processor computer system, a mini computer, and a main frame computer.

The exemplary embodiments described in the present disclosure may also be implemented in a distributed computing environment in which predetermined tasks are performed by remote processing devices connected through a communication network. In the distributed computing environment, the program module may be positioned in both local and remote memory storage devices.
The computer generally includes various computer readable media. Media accessible by the computer may be computer readable media regardless of types thereof and the computer readable media include volatile and non-volatile media, transitory and non-transitory media, and mobile and non-mobile media. As a non-limiting example, the computer readable media may include both computer readable storage media and computer readable transmission media. The computer readable storage media include volatile and non-volatile media, transitory and non-transitory media, and mobile and non-mobile media implemented by a predetermined method or technology for storing information such as a computer readable instruction, a data structure, a program module, or other data. The computer readable storage media include a RAM, a ROM, an EEPROM, a flash memory or other memory technologies, a CD-ROM, a digital video disk (DVD) or other optical disk storage devices, a magnetic cassette, a magnetic tape, a magnetic disk storage device or other magnetic storage devices or predetermined other media which may be accessed by the computer or may be used to store desired information, but are not limited thereto.
The computer readable transmission media generally implement the computer readable command, the data structure, the program module, or other data in a carrier wave or a modulated data signal such as other transport mechanism and include all information transfer media. The term "modulated data signal" means a signal obtained by setting or changing at least one of characteristics of the signal so as to encode information in the signal. As a non-limiting example, the computer readable transmission media include wired media such as a wired network or a direct-wired connection and wireless media such as acoustic, RF, infrared and other wireless media. A combination of anymedia among the aforementioned media is also included in a range of the computer readable transmission media.

An exemplary environment 1100 that implements various aspects of the present disclosure including a computer 1102 is shown and the computer 1102 includes a processing device 1104, a system memory 1106, and a system bus 1108. The system bus 1108 connects system components including the system memory 1106 (not limited thereto) to the processing device 1104. The processing device 1104 may be a predetermined processor among various commercial processors. A dual processor and other multi-processor architectures may also be used as the processing device 1104.

The system bus 1108 may be any one of several types of bus structures which may be additionally interconnected to a local bus using any one of a memory bus, a peripheral device bus, and various commercial bus architectures. The system memory 1106 includes a read only memory (ROM) 1110 and a random access memory (RAM) 1112. A basic input/output system (BIOS) is stored in the non-volatile memories 1110 including the ROM, the EPROM, the EEPROM, and the like and the BIOS includes a basic routine that assists in transmitting information among components in the computer 1102 at a time such as in-starting. The RAM 1112 may also include a high-speed RAM including a static RAM for caching data, and the like.

The computer 1102 also includes an interior hard disk drive (HDD) 1114 (for example, EIDE and SATA), in which the interior hard disk drive 1114 may also be configured for an exterior purpose in an appropriate chassis (not illustrated), a magnetic floppy disk drive (FDD) 1116 (for example, for reading from or writing in a mobile diskette 1118), and an optical disk drive 1120 (for example, for reading a CD-ROM disk 1122 or reading from or writing in other high-capacity optical media such as the DVD, and the like). The hard disk drive 1114, the magnetic disk drive 1116, and the optical disk drive 1120 may be connected to the system bus 1108 by a hard disk drive interface 1124, a magnetic disk drive interface 1126, and an optical drive interface 1128, respectively. An interface 1124 for implementing an exterior drive includes at least one of a universal serial bus (USB) and an IEEE 1394 interface technology or both of them.
The drives and the computer readable media associated therewith provide non-volatile storage of the data, the data structure, the computer executable instruction, and others. In the case of the computer 1102, the drives and the media correspond to storing of predetermined data in an appropriate digital format. In the description of the computer readable media, the mobile optical media such as the HDD, the mobile magnetic disk, and the CD or the DVD are mentioned, but it will be well appreciated by those skilled in the art that other types of media readable by the computer such as a zip drive, a magnetic cassette, a flash memory card, a cartridge, and others may also be used in an exemplary operating environment and further, the predetermined media may include computer executable commands for executing the methods of the present disclosure. Multiple program modules including an operating system 1130, one or more application programs 1132, other program module 1134, and program data 1136 may be stored in the drive and the RAM 1112. All or some of the operating system, the application, the module, and/or the data may also be cached in the RAM 1112. It will be well appreciated that the present disclosure may be implemented in operating systems which are commercially usable or a combination of the operating systems.

A user may input instructions and information in the computer 1102 through one or more wired/wireless input devices, for example, pointing devices such as a keyboard 1138 and a mouse 1140. Other input devices (not illustrated) may include a microphone, an IR remote controller, a joystick, a game pad, a stylus pen, a touch screen, and others. These and other input devices are often connected to the processing device 1104 through an input device interface 1142 connected to the system bus 1108, but may be connected by other interfaces including a parallel port, an IEEE 1394 serial port, a game port, a USB port, an IR interface, and others.

A monitor 1144 or other types of display devices are also connected to the system bus 1108 through interfaces such as a video adapter 1146, and the like. In addition to the monitor 1144, the computer generally includes other peripheral output devices (not illustrated) such as a speaker, a printer, others.

The computer 1102 may operate in a networked environment by using a logical connection to one or more remote computers including remote computer(s) 1148 through wired and/or wireless communication. The remote computer(s) 1148 may be a workstation, a computing device computer, a router, a personal computer, a portable computer, a micro-processor based entertainment apparatus, a peer device, or other general network nodes and generally includes multiple components or all of the components described with respect to the computer 1102, but only a memory storage device 1150 is illustrated for brief description. The illustrated logical connection includes a wired/wireless connection to a local area network (LAN) 1152 and/or a larger network, for example, a wide area network (WAN) 1154. The LAN and WAN networking environments are general environments in offices and companies and facilitate an enterprise-wide computer network such as Intranet, and all of them may be connected to a worldwide computer network, for example, the Internet.

When the computer 1102 is used in the LAN networking environment, the computer 1102 is connected to a local network 1152 through a wired and/or wireless communication network interface or an adapter 1156. The adapter 1156 may facilitate the wired or wireless communication to the LAN 1152 and the LAN 1152 also includes a wireless access point installed therein in order to communicate with the wireless adapter 1156. When the computer 1102 is used in the WAN networking environment, the computer 1102 may include a modem 1158 or has other means that configure communication through the WAN 1154 such as connection to a communication computing device on the WAN 1154 or connection through the Internet. The modem 1158 which may be an internal or external and wired or wireless device is connected to the system bus 1108 through the serial port interface 1142. In the networked environment, the program modules described with respect to the computer 1102 or some thereof may be stored in the remote memory/storage device 1150. It will be well known that an illustrated network connection is exemplary and other means configuring a communication link among computers may be used.

The computer 1102 performs an operation of communicating with predetermined wireless devices or entities which are disposed and operated by the wireless communication, for example, the printer, a scanner, a desktop and/or a portable computer, a portable data assistant (PDA), a communication satellite, predetermined equipment or place associated with a wireless detectable tag, and a telephone. This at least includes wireless fidelity (Wi-Fi) and Bluetooth wireless technology. Accordingly, communication may be a predefined structure like the network in the related art or just ad hoc communication between at least two devices.

The wireless fidelity (Wi-Fi) enables connection to the Internet, and the like without a wired cable. The Wi-Fi is a wireless technology such as the device, for example, a cellular phone which enables the computer to transmit and receive data indoors or outdoors, that is, anywhere in a communication range of a base station. The Wi-Fi network uses a wireless technology called IEEE 802.11(a, b, g, and others) in order to provide safe, reliable, and high-speed wireless connection. The Wi-Fi may be used to connect the computers to each other or the Internet and the wired network (using IEEE 802.3 or Ethernet). The Wi-Fi network may operate, for example,at a data rate of 11 Mbps (802.11a) or 54 Mbps (802.11b) in unlicensed 2.4 and 5GHz wireless bands or operate in a product including both bands (dual bands).

It will be appreciated by those skilled in the art that information and signals may be expressed by using various different predetermined technologies and techniques. For example, data, instructions, commands, information, signals, bits, symbols, and chips which may be referred in the above description may be expressed by voltages, currents, electromagnetic waves, magnetic fields or particles, optical fields or particles, or predetermined combinations thereof.

It may be appreciated by those skilled in the art that various exemplary logical blocks, modules, processors, means, circuits, and algorithm steps described in association with the exemplary embodiments disclosed herein may be implemented by electronic hardware, various types of programs or design codes (for easy description, herein, designated as software), or a combination of all of them. In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present disclosure may implement functions described by various methods with respect to each specific application, but it should not be interpreted that the implementation determination departs from the scope of the present disclosure.

Various exemplary embodiments presented herein may be implemented as manufactured articles using a method, a device, or a standard programming and/or engineering technique. The term manufactured article includes a computer program, a carrier, or a medium which is accessible by a predetermined computer-readable storage device. For example, a computer-readable storage medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information.
It will be appreciated that a specific order or a hierarchical structure of steps in the presented processes is one example of exemplary accesses. It will be appreciated that the specific order or the hierarchical structure of the steps in the processes within the scope of the present disclosure may be rearranged based on design priorities. Appended method claims provide elements of various steps in a sample order, but the method claims are not limited to the presented specific order or hierarchical structure.

The description of the presented exemplary embodiments is provided so that those skilled in the art of the present disclosure use or implement the present disclosure. Various modifications of the exemplary embodiments will be apparent to those skilled in the art and general principles defined herein can be applied to other exemplary embodiments without departing from the scope of the present disclosure. Therefore, the present disclosure is not limited to the exemplary embodiments presented herein, but should be interpreted within the widest range which is coherent with the principles and new features presented herein.

## Claims

1. A method for anomaly detection using depth information performed by a computing device, the method comprising:
obtaining first image data including depth information by scanning a surface of a product;
generating reference image data of the product based on the first image data;
obtaining second image data based on a difference between the reference image data and the first image data; and
detecting a defect region of the product based on the second image data,
wherein generating the reference image data comprises:
generating a first baseline based on cross sectional data extracted from the first image data in a first direction;
generating a second baseline based on a data distribution extracted from the first image data in a second direction different from the first direction; and
generating the reference image data by combining the first baseline and the second baseline.

2. The method of claim 1,
wherein obtaining the first image data comprises:
obtaining N bit raw image data including depth information by scanning the surface of the product;
preprocessing the N bit raw image data to generate M bit preprocessed image data; and
obtaining the preprocessed image data as the first image data,
wherein M is a natural number greater than N.

3. The method of claim 1,
wherein generating the first baseline comprises:
selecting a mathematical model based on the cross sectional data;
sampling data corresponding to a plurality of reference points from the cross sectional data;
fitting the selected mathematical model using the sampled data; and
generating the first baseline using the fitted mathematical model.

4. The method of claim 1,
wherein generating the second baseline comprises:
generating the second baseline based on an average value of the extracted data distribution.

5. The method of claim 1,
wherein obtaining the second image data comprises:
converting a data type of each of the reference image data and the first image data;
calculating a difference between the reference image data and the first image data based on the converted data type; and
obtaining the second image data by emphasizing a data point having a difference larger than a threshold value.

6. The method of claim 1,
wherein detecting the defect region of the product comprises:
correcting the second image data by clipping values outside a threshold range into the threshold range in the second image data; and
detecting the defect region of the product based on the corrected image data.

7. The method of claim 1, further comprising:
performing anomaly detection of the product based on the detected defect region by using a neural network model.

8. The method of claim 7,
wherein performing anomaly detection of the product comprises:
obtaining third image data including pixel intensity information by scanning the surface of the product;
verifying the detected defect region based on the third image data; and
performing anomaly detection of the product based on the detected defect region when a confidence of the detected defect region is equal to or greater than a threshold value as a result of the verification.

9. The method of claim 7,
wherein performing anomaly detection of the product comprises:
obtaining third image data including pixel intensity information by scanning the surface of the product; and
performing anomaly detection of the product based on the detected defect region and the third image data by using the neural network model.

10. A computer program stored in a non-transitory computer-readable storage medium, wherein the computer program causes one or more processors to perform operations when the computer program is executed by the one or more processors, the operations comprising:
an operation of obtaining first image data including depth information by scanning a surface of a product;
an operation of generating reference image data of the product based on the first image data;
an operation of obtaining second image data based on a difference between the reference image data and the first image data; and
an operation of detecting a defect region of the product based on the second image data,
wherein the operation of generating the reference image data comprises:
an operation of generating a first baseline based on cross sectional data extracted from the first image data in a first direction;
an operation of generating a second baseline based on a data distribution extracted from the first image data in a second direction different from the first direction; and
an operation of generating the reference image data by combining the first baseline and the second baseline.

11. The computer program of claim 10, wherein the operation of generating the first baseline comprises:
an operation of selecting a mathematical model based on the cross sectional data;
an operation of sampling data corresponding to a plurality of reference points from the cross sectional data;
an operation of fitting the selected mathematical model using the sampled data; and
an operation of generating the first baseline using the fitted mathematical model.

12. The computer program of claim 10, wherein the operation of generating the second baseline comprises:
an operation of generating the second baseline based on an average value of the extracted data distribution.

13. The computer program of claim 10, wherein the operations further comprise:
an operation of performing anomaly detection of the product based on the detected defect region by using a neural network model.

14. A computing device comprising:
at least one processor; and
a memory,
wherein the at least one processor is configured to:
obtain first image data including depth information by scanning a surface of a product;
generate reference image data of the product based on the first image data;
obtain second image data based on a difference between the reference image data and the first image data; and
detect a defect region of the product based on the second image data,
wherein generating the reference image data comprises:
generating a first baseline based on cross sectional data extracted from the first image data in a first direction;
generating a second baseline based on a data distribution extracted from the first image data in a second direction different from the first direction; and
generating the reference image data by combining the first baseline and the second baseline.

15. The computing device of claim 14, wherein the at least one processor is further configured to:
select a mathematical model based on the cross sectional data;
sample data corresponding to a plurality of reference points from the cross sectional data;
fit the selected mathematical model using the sampled data; and
generate the first baseline using the fitted mathematical model.
